# EUROPÄISCHE PATENTSCHRIFT

(11) **EP 3 470 452 B1**
(45) Veröffentlichungstag und Bekanntmachung des Hinweises auf die Patenterteilung: **19.05.2021**
(21) Anmeldenummer: 18199581.2
(22) Anmeldetag: 25.10.2011
(51) Int. Cl.: C08G 69/20, C08G 69/18, C08G 69/16, B29C 67/24

(54) **VERFAHREN ZUR HERSTELLUNG VON GUSSPOLYAMIDEN**
METHOD FOR MANUFACTURING CAST POLYAMIDES
PROCÉDÉ DE FABRICATION DE POLYAMIDES DE FONTE

(30) Priorität: 29.10.2010 EP 10189435
(43) Veröffentlichungstag der Anmeldung: 17.04.2019
(62) Teilanmeldung aus: 11186586.1
(73) Patentinhaber: LANXESS Deutschland GmbH, 50569 Köln (DE)
(72) Erfinder: LAUFER, Wilhelm, 67158 Ellerstadt (DE); ECKERT, Armin, 68794 Oberhausen-Rheinhausen (DE)

(56) Entgegenhaltungen:
- EP-A1- 1 975 191
- EP-A1- 2 666 802
- EP-A2- 2 093 246
- DE-A1- 1 720 352
- DE-A1- 1 942 992
- DE-A1- 2 559 749
- DE-A1- 4 404 221

## Beschreibung

Die vorliegende Erfindung betrifft neue Verfahren zur Herstellung von Gusspolyamiden.

Gusspolyamide sind besonders hochmolekulare Polyamide. Bei der Herstellung von Gusspolyamiden wird ein Lactam zusammen mit mindestens einem Katalysator und mindestens einem Aktivator in eine Form gegossen und dann in dieser Form anionisch polymerisiert. Die in der Form vorliegenden Ausgangsverbindungen polymerisieren dabei im Allgemeinen unter der Einwirkung von Wärme. Dabei entsteht ein homogener Werkstoff, welcher extrudierte Polyamide im Hinblick auf die Kristallinität übertrifft.

Gusspolyamide sind als thermoplastische Kunststoffe für die Fertigung komplexer Bauteile geeignet. Sie müssen im Gegensatz zu vielen anderen Thermoplasten nicht aufgeschmolzen werden, sondern entstehen durch eine drucklose anionische Polymerisation von einem Lactam in einer Form bei 120 bis 150 °C bereits in wenigen Minuten. Dabei können alle bekannten Gießverfahren wie Standguss, Rotations- und Schleuderguss angewendet werden. Als Endprodukt erhält man jeweils Formteile aus einem hochmolekularen, kristallinen Polyamid, das sich durch ein niedriges Gewicht, eine hohe mechanische Belastbarkeit, sehr gute Gleiteigenschaften und eine hervorragende Chemikalienbeständigkeit auszeichnet und das - da die Formen nicht unter Druck gefüllt werden - nur geringe innere Spannungen aufweist. Gusspolyamide lassen sich Sägen, Bohren, Fräsen, Schleifen, Verschweißen und Bedrucken oder Lackieren; neben komplexen Hohlformen werden aus diesem Polymer beispielsweise auch Rollen für Personenaufzüge und Halbzeuge wie zum Beispiel Rohre, Stäbe und Platten für den Maschinenbau und die Automobilindustrie gefertigt.

Die Herstellung von Gusspolyamidteilen, ausgehend von niedrig viskosen Lactamschmelzen und einem Katalysator sowie einem Aktivator durch die sogenannte aktivierte anionische Polymerisation ist an sich bekannt. Zu diesem Zweck werden üblicherweise zwei Mischungen aus Katalysator und Lactam bzw. Aktivator und Lactam in Form einer flüssigen Schmelze frisch vor der Polymerisation getrennt voneinander hergestellt, unmittelbar miteinander vermischt und anschließend in der Gussform polymerisiert siehe z.B. DE-A 1720352, DE-A 1942992, DE-A 2559749, EP-A 1975191, EP-A 2093246, DE-A 4404221 sowie DE-A 2122573. Dies soll sicherstellen, dass es im Vorfeld zu keinen unerwünschten Reaktion kommt.

Da die Katalysatoren/Aktivatoren nur in geringen Mengen benötigt werden, ist die Dosierung schwierig. Ungenaue Dosierung führt zu großen Schwankungen in der Produktqualität und somit zu Fehlchargen. Zudem leidet der Aktivator/Katalysator bei mehrfachem Inkontaktbringen mit Luft und Feuchtigkeit. Auch unter den Gesichtspunkten der Arbeitshygiene ist es daher wünschenswert, Aktivator und/oder Katalysator auf eine andere und sicherere Art bereitzustellen.

Eine Aufgabe der vorliegenden Erfindung besteht somit darin, ein kostengünstiges und effizientes Verfahren bereitzustellen, das die Nachteile des Standes der Technik nicht aufweist.

Überraschenderweise wurde nun gefunden, dass die Abmischungen von mindestens einem Aktivator in mindestens einem Lactam und gegebenenfalls mindestens einem Katalysator in mindestens einem Lactam unter Einhaltung bestimmter Konzentrationsgrenzen leichter oder überhaupt herstellbar, isolierbar und lagerbar sind und als sog. BATCH-READY®-Lactam in den für die Polymerisation gewünschten Konzentration eingesetzt werden können. Diese hohe Qualitätskonstanz der Batch-Ready®-Produkte ist auf die äußerst präzise Einwaage der einzelnen Rezepturbestandteile sowie der anschließenden erleichterten Dosierung des homogenisierten Mischgutes zurückzuführen. Damit entfallen die unter Qualitäts- und auch unter Arbeitsicherheitskriterien kritischen Dosierungsmaßnahmen für Kleinstmengen.

Gegenstand der vorliegenden Erfindung ist somit ein neues Verfahren zur Herstellung von Gußpolyamiden durch Polymerisation von Lactamen in Gegenwart von mindestens einem Aktivator und mindestens einem Katalysator, wonach
a) der Aktivator zu maximal 5 Gew.%, bevorzugt maximal 2 Gew.%, besonders bevorzugt 0,1 Gew.% bis maximal 1 Gew.%, zu einer Lactamschmelze bei Temperaturen zwischen 70 und 120 °C, bevorzugt 80 - 100 °C, gegeben, diese homogenisiert, isoliert, gegebenenfalls getrocknet, konfektioniert und gelagert wird, oder auf einem Pastillierband pastilliert oder auf einer Schuppenwalze abgeschuppt wird und
b) der Katalysator zu maximal 5 Gew.%, bevorzugt 0,2 Gew. % bis maximal 2 Gew.% ganz besonders bevorzugt zwischen 1 und 2 Gew. %, zu einer Lactamschmelze bei Temperaturen zwischen 70 und 120 °C, bevorzugt 80 - 100 °C, gegeben, diese homogenisiert, danach auf einem Pastillierband pastilliert oder auf einer Schuppenwalze abgeschuppt wird,
die Schmelzen von a) und b) zusammengemischt und anschließend in der Gußform bei Temperaturen zwischen 80 und 160°C polymerisiert werden.

In einer Ausführungsform der Erfindung wird der Aktivator zu einer Lactamschmelze bei Temperaturen zwischen 70 und 120 °C, bevorzugt 80 - 100 °C, gegeben, diese homogenisiert, isoliert, getrocknet, konfektioniert und gelagert.

In einer weiteren Ausführungsform der Erfindung wird der Aktivator zu einer Lactamschmelze bei Temperaturen zwischen 70 und 120 °C, bevorzugt 80 - 100 °C, gegeben, diese homogenisiert, isoliert, konfektioniert und gelagert.

Als Lactam im Sinne der Erfindung können Verbindungen der allgemeinen Formel (I) 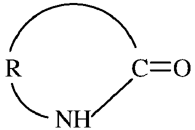 eingesetzt werden, wobei R eine Alkylengruppe mit 3 bis 13 Kohlenstoffatomen darstellt. Bevorzugt handelt es sich dabei um Capro-Lactam und/oder Laurin-Lactam. Diese sind kommerziell erhältlich z.B. bei der Firma Lanxess Deutschland GmbH.

Als Aktivatoren im Sinne der Erfindung können Isocyanate allein oder in Form einer Mischung mit Isocyanuraten, Biureten, Allophanaten, Uretdionen und/oder Carbodiimiden eingesetzt werden. Ebenfalls einsetzbar im Sinne der Erfindung sind Aktivatoren, die geblockt sind z. B. mit Lactamen, besonders bevorzugt Caprolactam, oder mit Phenolen, Oximen und/oder Epoxiden und/oder auch lösemittelhaltige Aktivatoren. Als Lösemittel eignen sich: N-Alkylpyrrolidone, wie z. B. N-Methylpyrrolidon und N-Ethylpyrolydon, Polyglycole wie z. B. Polyglycol DME 200, Dipropylenglycol DME oder Tetraethylenglykol DME. Dabei handelt es sich um handelsübliche Produkte, die z.B. bei der Firma Clariant erhältlich sind.

Isocyanate im Sinne der Erfindung sind 2,4-Toluylendiisocyanat (TDI), 2,6-Toluylendiisocyanat, ein Gemisch aus 2,4-Toluylendiisocyanat und 2,6-Toluylendiisocyanat, Hexamethylendiisocyanat, Cyclohexan-1,4-diisocyanat, Xylylendiisocyanat, Isophorondiisocyanat, 1,5-Naphthalindiisocyanat, 4,4'-Diphenylmethan-diisocyanat, 2,4'-Diphenyl-methandiisocyanat, 2,2'-Diphenylmethandiisocyanat, 4,4'-Diphenyl-dimethyl-methandiisocyanat, 1,3-Phenylen-diisocyanat, 1,4-Phenylendiisocyanat, Dicyclo-hexylmethan-4,4'-diisocyanat, Dicyclohexylmethan-2,4'-diisocyanat, Dicyclohexylmethan-2,2'-diisocyanat, Methylcyclohexan-diisocyanat, Tetramethylxylylendiisocyanat, 2,6-Diisopropyl-phenylen-isocyanat und deren Gemische,. Besonders bevorzugt ist Hexamethylendiisocyanat. Die vorgenannten Verbindungen sind handelsüblich und sind beispielsweise bei der Firma Bayer MaterialScience AG erhältlich.

Isocyanurate im Sinne der Erfindung sind Verbindungen der Formel (II) 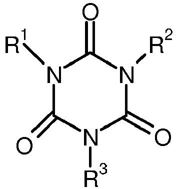 mit R¹, R² und R³ jeweils unabhängig voneinander -(CH₂)ₘ-N=C=O, -(CH₂)_{q}-[(C₆H₃)(Me/Et)₃(N=C=O)], und m = 1 - 12, q = 0 - 6 und Me = Methyl und Et = Ethyl, wobei
R¹, R² und R³ vorzugsweise gleich sind.

Dabei sind die folgenden Verbindungen der Formel (III) 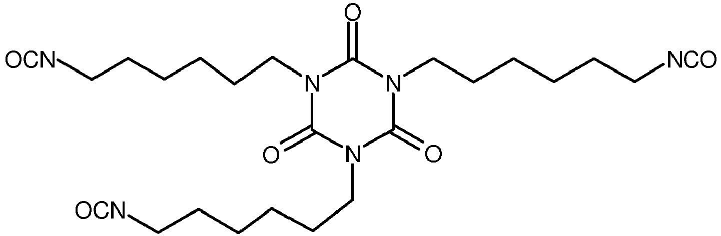 und der Formel (IV) 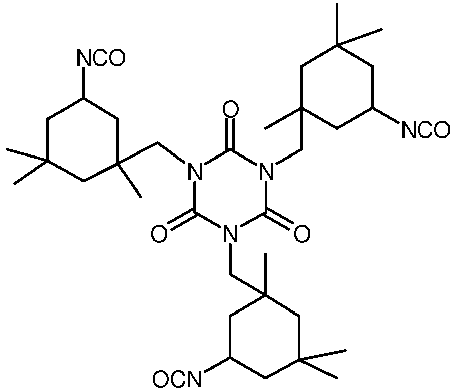 bevorzugt.

Die vorgenannten Verbindungen sind handelsüblich und sind beispielsweise bei der Firma Bayer MaterialScience AG erhältlich.

Biurete im Sinne der Erfindung sind beispielsweise Verbindungen der Formel (V) 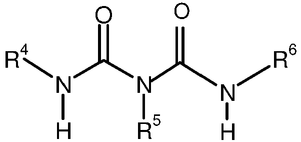 mit R⁴, R⁵ und R⁶ jeweils unabhängig voneinander -(CH₂)ₚ-N=C=O, mit p = 1 - 12, wobei
R⁴, R⁵ und R⁶ vorzugsweise gleich sind.

In einer besonders bevorzugten Ausführungsform der Erfindung handelt es sich bei dem Biuret um eine Verbindung der Formel (VI)

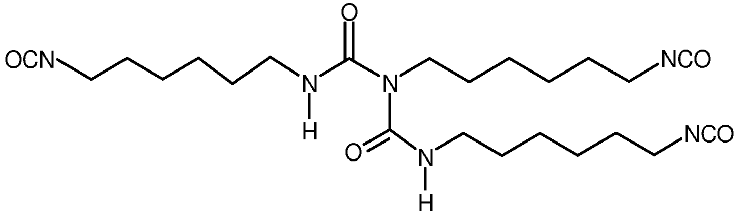

Die vorgenannten Verbindungen sind handelsüblich und sind beispielsweise bei der Firma Bayer MaterialScience AG erhältlich.

Uretdione im Sinne der Erfindung sind Umsetzungsprodukte von mindestens zwei Isocyanaten unter der Ausbildung von mindestens zwei Dioxodiazetidin-Bindungen:

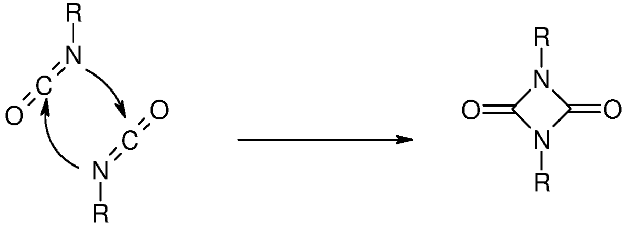

Die Herstellung ist dem Fachmann an sich bekannt. Die Verbindungen können beispielsweise gemäß der in EP 1 422 223 A1 beschriebenen Verfahren hergestellt werden.

Das Uretdion kann ein Dimer, Trimer, Oligomer oder Polymer sein.

Geeignete Beispiele für Uretdione, die einen aliphatischen oder cycloaliphatischen Rest aufweisen, sind dem Fachmann an sich bekannt und entsprechende monomere Uretdione umfassen beispielsweise Isophorondiisocyanat, 1,4-Cyclohexyldiisocyanat, 1,1-Methylen-bis-(4-isocyanatocyclohexan), 1,2-Bis-(4-isocyanatononyl)-3-heptyl-4-pentyl-cyclohexan und Hexamethylen-1,6-diisocyanat. Hierbei ist die Verwendung von Isophorondiisocyanat und Hexamethylen-1,6-diisocyanat bevorzugt.

Darüber hinaus ist es im Rahmen der vorliegenden Erfindung möglich, dass als Aktivator ein Uretdion verwendet wird, welches ausgehend von einem aromatischen Isocyanat erhalten wird. Dieses aromatische Isocyanat weist vorzugsweise 6 bis 20 Kohlenstoffatome, besonders bevorzugt 6 bis 15 Kohlenstoffatome, auf. Entsprechende aromatische monomere Isocyanate können beispielsweise ausgewählt werden aus der Gruppe, bestehend aus 2,4-Diisocyanatotoluol, 2,6-Diisocyanatotoluol, 1,5-Naphthylendiisocyanat, 4,4'-Methylen-diphenyldiisocyanat, 1,3-Bis-(3-isocyanato-4-methylphenyl)-2,4-dioxodiazetidin, N,N'-Bis-(4-methyl-3-isocyanatophenyl)-Harnstoff und Tetramethylxylylendiisocyanat. Von diesen aromatischen Isocyanaten sind 2,4-Diisocyanatotoluol, 2,6-Diisocyanatotoluol und 4,4'-Methylen-bis(phenyldiisocyanat) bevorzugt. Insbesondere bevorzugt sind 2,6-Diisocyanatotoluol und 4,4'-Methylen-bis(phenyldiisocyanat).

Die vorgenannten Verbindungen sind handelsüblich und sind beispielsweise bei der Firma Rhein Chemie Rheinau GmbH oder die der Bayer MaterialScience AG erhältlich.

Allophanate im Sinne der Erfindung sind Verbindungen der Formel (VII)

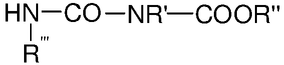

Diese Verbindungen sind im Allgemeinen durch Umsetzung beliebiger urethan- und/oder harnstoffgruppenhaltiger Ausgangsverbindungen enthaltend Einheiten der allgemeinen Formel (R"OOC-NHR') mit Monoisocyanaten der allgemeinen Formel R"'-NCO oder mit Diisocyanaten der allgemeinen Formel OCN-A-NCO zugänglich, wobei R'" bzw. A bevorzugt ein Alkylrest mit 1 bis 20 Kohlenstoffatomen oder ein Arylrest mit 6 bis 20 Kohlenstoffatomen ist und R' und R" unabhängig voneinander für Alkylrest mit 1 - 20 Kohlenstoffatomen oder ein Arylrest mit 6 bis 20 Kohlenstoffatomen stehen.

Als Monoisocyanate eignen sich beliebige aromatische, aliphatische und cycloaliphatische Monoisocyanate mit bis zu 20 Kohlenstoffatomen, wie Methylisocyanat, Isopropylisocyanat, n-Butylisocyanat, n-Hexylisocyanat, Cyclohexylisocyanat, Stearylisocyanat, die gegebenenfalls halogenierten Phenylisocyanate, 1-Naphtylisocyanat, die gegebenenfalls chlorierten oder fluorierten m-, o-, und p-Toloylisocyanate, p-Isopropylphenylisocyanat, 2,6-Diisopropylphenylisocyanat und p-Toluolsulfonyldiisocyanat.

Als Diisocyanate eignen sich beliebige aromatische, aliphatische und cycloaliphatische Diisocyanate mit 6 bis 40 Kohlenstoffatomen, vorzugsweise 6 bis 15 Kohlenstoffatomen, wie Isophorondiisocyanat, 1,4-Cyclohexyldiisocyanat, 1,1-Methylen-bis-(isocyanatohexan), 1,2-Bis-(4-Isocyanatononyl)-3-heptyl-4-pentylcyclohexan, Hexamethylen-1,6-diisocyanat, 2,4-Diisocyanatotoluol, 2,6-Diisocyanatotoluol, 1,5-Naphthylendiisocyanat, 4,4'-Methylen-diphenyldiisocyanat, 1,3-Bis-(3-isocyanto-4-methylphenyl)-2,4-dioxodiazetidin, N,N'-Bis-(4-methyl-3-isocyanatophenyl)-Harnstoff und Tetramethylxylylendiisocyanat. Bevorzugt hiervon ist Hexamethylen-1,6-diisocyanat.

Die im Rahmen der vorliegenden Erfindung besonders bevorzugten Allophanate sind Verbindungen der Formel (VIII) 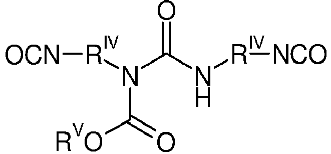 wobei R^{IV} innerhalb des Moleküls gleich oder verschieden sein können und C₁-C₆-Alkyl, vorzugsweise -(CH₂)₆- bedeuten, und R^{V} C₁-C₆-Alkyl entspricht.

Entsprechende Allophanate sowie deren Herstellung sind beispielsweise in der EP 0 000 194A1 beschrieben, dessen diesbezügliche Offenbarung in die vorliegende Erfindung unter Bezugnahme eingeschlossen wird. Die vorgenannten Verbindungen sind handelsüblich und sind beispielsweise bei der Firma Bayer MaterialScience AG erhältlich.

Carbodiimide im Sinne der Erfindung sind vorzugsweise Verbindungen der Formel (IX)

R¹¹-(-N=C=N-R¹²-)ₘ-R¹³ (IX),

in der
m einer ganzen Zahl von 1 bis 500 entspricht,
R¹² = C₁ - C₁₈-Alkylen, C₅-C₁₈-Cycloalkylen-, Arylen und/oder C₇-C₁₈- Aralkylen,
R¹¹ = R-NCO, R-NHCONHR⁹, R-NHCONR⁹R⁷ oder R-NHCOOR⁸ und
R¹³ = -NCO, -NHCONHR⁹, -NHCONR⁹R⁷ oder -NHCOOR⁸ ist,
wobei in R¹¹ unabhängig voneinander R⁹ und R⁷ gleich oder verschieden sind und einen C₁-C₆-Alkyl-, C₆-G₁₀-Cycloalkyl- oder C₇-C₁₈-Aralkylrest darstellen und R⁸ eine der Bedeutungen von R¹¹ hat oder einen Polyester- oder einen Polyamidrest oder -(CH₂)₁-(O-(CH₂)ₖ-O)_{g}-R¹⁰ bedeutet,
mit 1 = 1-3, k= 1-3, g = 0-12 und
R¹⁰= H oder C₁-C₄-Alkyl.

Ebenfalls einsetzbar sind auch Gemische von Carbodiimiden der Formel (IX), inklusive der entsprechenden Oligomere und/oder Polymere, wobei polymerer Carbodiimide bevorzugt sind.

Die Verbindungen nach Formel (IX) sind kommerziell erhältlich, z.B. bei der Firma Rhein Chemie Rheinau GmbH oder lassen sich nach den dem Fachmann geläufigen Verfahren herstellen, wie z.B. beschrieben in DE-A-11 30 594 oder US 2 840 589 oder durch die Kondensation von Diisocyanaten unter Abspaltung von Kohlendioxid bei erhöhten Temperaturen, z.B. bei 40 °C bis 200 °C, in Gegenwart von Katalysatoren. Als Katalysatoren haben sich z.B. starke Basen oder Phosphorverbindungen bewährt. Vorzugsweise werden Phospholenoxide, Phospholidine oder Phospholinoxide sowie die entsprechenden Sulfide verwendet. Ferner können als Katalysatoren tertiäre Amine, basisch reagierende Metallverbindungen, Carbonsäuremetallsalze und nicht basische Organometallverbindungen verwendet werden.

Die vorgenannten Verbindungen sind handelsüblich und sind beispielsweise bei der Firma Rhein Chemie Rheinau GmbH erhältlich.

Geblockte Aktivatoren, vorzugsweise mit Lactamen, besonders bevorzugt Caprolactam, oder mit Phenolen, Oximen und/oder Epoxiden geblockte Aktivatoren sind beispielsweise herstellbar über die Umsetzung mindestens einer Verbindung der Formel (I) bis (IX) mit mindestens einem Lactam, Caprolactam, Phenolen, Oxim und/oder Epoxid bei Temperaturen von 80 bis 100°C nach den, dem Fachmann geläufigen Verfahren.

Als Katalysatoren im Sinne der Erfindung können Lactam-Magnesium-Halogenide, bevorzugt Bromide, Alkali-Alumo Dilactamate, bevorzugt Natrium, Alkali- und/oder Erdalkalilactamate, bevorzugt Natrium, Kalium und/oder Magnesium, einzeln oder im Gemisch eingesetzt werden. Die vorgenannten Katalysatoren sind handelsüblich und sind beispielsweise bei der Firma Rhein Chemie Rheinau GmbH oder bei der Firma KatChem spol.s.r.o. erhältlich.

In einer Ausführungsform der Erfindung werden Mischung a) und Mischung b) bei Temperaturen zwischen 80 und 160°C, vorzugsweise 100 und 140°C zur Polymerisation zusammengegeben. Die Polymerisation erfolgt nach den, dem Fachmann geläufigen Verfahren, wie z.B. beschrieben in Kunststoffhandbuch, Bd.3/4, Technische Thermoplaste, Hanser Fachbuch, Seiten 413 - 430. Dabei wird die Mischung vorzugsweise gerührt. Einsetzbar hierfür sind Mischaggregate, wie z.B. Rührkesseln.

In einer anderen bevorzugten Ausführungsform der Erfindung erfolgt vor dem Aufschmelzen die Zugabe weiteren Lactams und/oder Katalysators.

In einer weiteren Ausführungsform der Erfindung werden zu der Mischung a) und Mischung b) noch weiteres Lactam und/oder weiterer Katalysator und/oder gegebenenfalls weitere Additive, wie Schlagzähmodifikatoren, wie z.B. Polyetheramin-Copolymere, Glasfasern, Endlosglassfasern, Kohlefasern, Aramidfasern und/oder Verarbeitungshilfsmittel, wie z.B. hochmolekulare Polyole, Verdicker, wie z.B. Aerosile, UV- und Thermostabilisatoren, Leitfähigkeitsverbesserer, wie z.B. Russe und Graphite, ionische Flüssigkeiten, Markierungsstoffe und/oder Farben zugegeben.

Die Mischungen a) und b) werden vorzugsweise in Mengenverhältnissen von 1:3 bis 3:1, besonders bevorzugt in Mengenverhältnissen von 1 : 1 eingesetzt.

Die Herstellung der erfindungsmäßen Mischungen a) und b) erfolgt vorzugsweise wie folgt:
a) Aktivatormischung
   Hierfür wird mindestens ein Aktivator der Formeln I - IX zu einer Lactamschmelze bei Temperaturen zwischen 70 und 120 °C, bevorzugt 80 - 100 °C gegeben, homogenisiert und in beheizte Kessel abgefüllt oder auf einem Pastillierband pastilliert bzw. auf einem Schuppenwalze abgeschuppt.
b) Katalysatormischung
   Hierfür wird mindestens ein Katalysator, wie z.B. Na-Caprolactamat oder ein hochkonzentrierter Na-Caprolactamat-Masterbatch, zu einer Lactamschmelze bei Temperaturen zwischen 70 und 120°C, bevorzugt 80 - 100°C, gegeben, homogenisiert und in beheizte Kessel abgefüllt oder auf einem Pastillierband pastilliert bzw. auf einem Schuppenwalze abgeschuppt.

Dabei sind gängige Pastilliersysteme ebenso wie gängige Schuppenwalzen einsetzbar. Diese sind z.B. erhältlich bei der Firma Sandvik Holding GmbH oder der Firma GMF Gouda.

Alternativ dazu kann die Katalysatormischung b) in Konzentrationen bis maximal 5 Gew.% aus den jeweiligen Edukten in Lactam mittels Direktsynthese hergestellt werden, wie z. B. in den dem Fachmann geläufigen Verfahren aus Lactam und Na-Methanolat bei anschließender oder gleichzeitiger Entfernung des Lösemittels durch Destillation. Das Verfahren kann sowohl als Batch- als auch in einem Konti-Prozeß erfolgen.

In einer Ausführungsform der vorliegenden Erfindung werden die Mischungen a) und b) nach der Herstellung isoliert, gegebenenfalls getrocknet, konfektioniert und gelagert. Unter Konfektionierung wird z.B. die Pulverisierung oder Zerkleinerung verstanden. Die nach dem erfindungsgemäßen Verfahren hergestellten Mischungen aus Lactam und Aktivator und/oder Katalysator zeichnen sich dabei durch eine hohe Lagerstabilität (mehrwöchige/ mehr als 6-wöchige Lagerung) aus, so dass es möglich ist, die Mischungen vor ihrem Einsatz gelagert und zum Einsatzort transportiert werden können. Damit ist es möglich, die Mischung exakt für den Einsatz zuzubereiten und so Schwankungen in der Zusammensetzung, die bei einer unmittelbar vor der Polymerisation hergestellten Mischungen entstehen, zu vermeiden.

Der Rahmen der Erfindung erfasst alle oben stehenden und im Folgenden aufgeführten allgemeinen oder in Vorzugsbereichen genannten Restedefinitionen, Indizes, Parameter und Erläuterungen untereinander, also auch zwischen den jeweiligen Bereichen und Vorzugsbereichen in beliebiger Kombination.

In den Fällen, in denen die Wirkstoffkonzentration der Mischung über der für die Polymerisation beabsichtigten Wirkstoffkonzentration kann vor der eigentlichen Polymerisation die Zugabe weiteren Lactams erfolgen.

In den Fällen, in denen nur der Aktivator als Mischung mit dem Lactam eingesetzt wird, wird vorzugsweise der Katalysator gegebenenfalls gemeinsam mit weiterem Lactam der Aktivatormischung bei der Polymerisation zugemischt.

Die nachfolgenden Beispiele dienen der Erläuterung der Erfindung, ohne dabei limitierend zu wirken.

### Ausführungsbeispiele:

### Reagenzien:

Caprolactam trocken (EP > 69 °C) von der Firma Lanxess Deutschland GmbH
Aktivator Addonyl® 8108, ein Hexamethylen-Diisocyanat (HDI)-Biuret, 70% in N-Ethylpyrolidon, kommerziell erhältlich bei der Rhein Chemie Rheinau GmbH,
Aktivator Brüggolen C20 (ca. 35 % HDI in Caprolactam), kommerziell erhältlich von der Firma Brüggemann GmbH,
Addonyl® Kat NL von der Rhein Chemie Rheinau GmbH, ca. 18 % Natriumcaprolactamat in Caprolactam.

### Durchführung und Messung:

Kolben A: 196,8 g Caprolactam und 3,2 g Addonyl® 8108, entspricht 2,2 g HDI-Biuret (Vergleichsbeispiel), unmittelbar vor der Messung zubereitet,
Kolben B: 192 g Caprolactam und 8 g 18 % iges Na-Caprolactamat in Caprolactam als Addonyl® Kat NL (Vergleichsbeispiel), unmittelbar vor der Messung zubereitet,
Kolben C: 197,8 g Caprolactam und 2,2 g HDI-Biuret (erfindungsgemäß), gelagert bei 90 °C über einen Zeitraum von: a) Kolben C1: 1 Woche, b) Kolben C2: 2 Wochen, c) Kolben C3: 6 Wochen.
Kolben D: 200 g festes Batch-Ready®-Caprolactam mit einem Na-Capro-Lactamat-Gehalt von 0,8 % (erfindungsgemäß),
Kolben E: 196,8 g Caprolactam und 3,2 g Brüggolen® C20 (Vergleichsbeispiel), unmittelbar vor der Messung zubereitet,
Kolben F: 200 g festes Batch-Ready®-Caprolactam mit einem HDI-Biuret-Gehalt von 1,2 % (erfindungsgemäß),
Kolben G: 200 g festes Batch-Ready®-Caprolactam mit einem HDI-Gehalt von 1,2 % (erfindungsgemäß),
Die Kolben A bis G wurden auf 122 °C (± 2 °C) aufgeheizt.

Die so erhaltenen Schmelzen wurden bei 122 °C (± 2 °C) in einem Ölbad unter Vakuum (<15 mbar) 20 Minuten aufbereitet. Nach Belüften mit Stickstoff wurden die Aktivator-Komponenten (Kolben A, C, E, F und G) mit der Katalysator-Komponente (Kolben B und D) wie in den nachstehenden Tabellen aufgeführt, in einen Dreihalskolben vereinigt, kurz durchgerührt und in das 600 ml Becherglas überführt. Die Formtemperatur (Becherglas) betrug 160° C.

Unmittelbar nach dem Zusammenführen der Schmelzen in einen Dreihalskolben wurde mit der Temperaturmessung begonnen. Diese erfolgte mittels Temperaturmessgerät Testo 175-T3 mit IR-Serial Interface.

Über einen Zeitraum von 15 Minuten wurden alle 10 Sekunden die Temperatur der polymerisierenden Lactamschmelze gemessen und protokolliert.

Es wurde die Kurve der Temperatur der Polymerisationsmischung über die Zeit gemessen und der Zeitpunkt bestimmt, in dem der Temperaturanstieg maximal war (Wendepunkt der Temperatur-Zeitkurve). Die Zeit vom Zusammengeben der Reaktionsmischungen bis zu dem Zeitpunkt des maximalen Temperaturanstiegs entspricht der Topfzeit.

Tabelle 1 zeigt die Ergebnisse beim Einsatz von festem Batch-Ready®-Caprolactam als Katalysatormischung und Batch-Ready® -Caprolactam als flüssig gelagertem Aktivator (90 °C), Mischungen II), III) und IV) im Vergleich zu der frisch hergestellte Aktivator/KatalysatorMischung (Mischung I))

**Tabelle 1:**

| Beispiele | Topfzeit | T. (max.) [°C] |
|---|---|---|
| I) Mischung aus A und B (Vergleichsbeispiel) | 300 - 500 s | > 190°C |
| II) Mischung aus C1 und D (erfindungsgemäß) | 300 - 500 s | > 190°C |
| III) Mischung aus C2 und D (erfindungsgemäß) | 300 - 500 s | > 190°C |
| IV) Mischung aus C3 und D (erfindungsgemäß) | 300 - 500 s | > 190°C |

Wie aus dem Vergleich der Beispiele ersichtlich, führt die Lagerung selbst über einen Zeitraum von mindestens 6 Wochen zu keiner Beeinträchtigung der Eigenschaften.

Tabelle 2 zeigt die Ergebnisse bei der Herstellung der festen Batch-Ready-Aktivatormischungen im Vergleich zu der Aktivatormischung Brüggolen C 20 aus dem Stand der Technik.

**Tabelle 2:**

| Aktivator | Pastillierbarkeit |
|---|---|
| Brüggolen C 20 (Vergleich) | sehr schlecht pastillierbar |
| 40 % HDI-Biuret in Caprolactam (Vergleich) | nicht pastillierbar |
| Mischung F (erfindungsgemäß) | sehr gut pastillierbar |
| Mischung G (erfindungsgemäß) | sehr gut pastillierbar |

Tabelle 3 zeigt die Ergebnisse beim Einsatz vom festem Batch-Ready-Caprolactam als Aktivator- und Katalysatormischung im Vergleich zum Stand der Technik

**Tabelle 3:**

| Beispiele | Topfzeit | T. (max.) [°C] |
|---|---|---|
| Mischung aus E und B (Vergleichsbeispiel) | 300 - 500 s | > 190°C |
| Mischung aus F und D (erfindungs gemäß) | 300 - 500 s | > 190°C |
| Mischung aus G und D (erfindungs gemäß) | 300 - 500 s | > 190°C |

Durch das erfindungsgemäße Verfahren ist es daher möglich, Aktivatoren- und Katalysatorenmischungen lösemittelfrei und technisch einfach herzustellen bzw. bereitzustellen, wodurch man auf eine aufwendige Dosierung von Kleinmengen an Katalysatoren und Aktivatoren im Herstellprozeß der Gußpolyamidteile verzichten kann. Durch das gezielte und präzise Einstellen der benötigten Aktivator- und Katalysatoranteile kann die Polymerisation stets optimal durchgeführt werden und eine konstante Qualität der Gußpolyamidteilen gewährleistet werden. Zudem ist das Verfahren wegen des einfacheren Handlings der benötigten Rohstoffen und der Minimierung des Personalaufwandes kostengünstiger und unter arbeitssicherheitstechnischen Gesichtpunkten vorteilhafter.

## Patentansprüche

1. Verfahren zur Herstellung von Gusspolyamiden durch Polymerisation von Lactamen in Gegenwart von mindestens einem Aktivator ausgewählt aus der Gruppe enthaltend 2,4-Toluylendiisocyanat (TDI), 2,6-Toluylendiisocyanat, ein Gemisch aus 2,4-Toluylendiisocyanat und 2,6-Toluylendiisocyanat, Hexamethylendiisocyanat, Cyclohexan-1,4-diisocyanat, Xylylendiisocyanat, Isophorondiisocyanat, 1,5-Naphthalindiisocyanat, 4,4'-Diphenylmethan-diisocyanat, 2,4'-Diphenyl-methandiisocyanat, 2,2'-Diphenylmethandiisocyanat, 4,4'-Diphenyl-dimethyl-methandiisocyanat, 1,3-Phenylen-diisocyanat, 1,4-Phenylendiisocyanat, Dicyclo-hexylmethan-4,4'-diisocyanat, Dicyclohexylmethan-2,4'-diisocyanat, Dicyclohexylmethan-2,2'-diisocyanat, Methylcyclohexan-diisocyanat, Tetramethylxylylendiisocyanat, 2,6-Diisopropyl-phenylen-isocyanat und mindestens einem Katalysator, **dadurch gekennzeichnet, dass**
a) der Aktivator zu maximal 5 Gew.% zu einer Lactamschmelze bei Temperaturen zwischen 70 und 120 °C, gegeben, diese homogenisiert, isoliert, gegebenenfalls getrocknet, konfektioniert und gelagert, oder auf einem Pastillierband pastilliert oder auf einer Schuppenwalze abgeschuppt wird,
b) der Katalysator zu maximal 5 Gew.% zu einer Lactamschmelze bei Temperaturen zwischen 70 und 120 °C, gegeben, diese homogenisiert, danach auf einem Pastillierband pastilliert oder auf einer Schuppenwalze abgeschuppt wird,
die Schmelzen von a) und b) zusammengemischt und anschließend in der Gussform bei Temperaturen zwischen 80 und 160°C polymerisiert werden.

2. Verfahren nach Anspruch 1, **dadurch gekennzeichnet, dass** die Temperaturen in Schritt a) 80-100 °C und in Schritt b) 80-100 °C betragen.

3. Verfahren zur Herstellung von Gusspolyamiden durch Polymerisation nach Anspruch 1
oder 2, **dadurch gekennzeichnet, dass** das Lactam der allgemeinen Formel 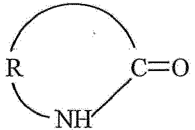 entspricht, wobei R eine Alkylengruppe mit 3 bis 13 Kohlenstoffatomen darstellt.

4. Verfahren nach einem der Ansprüche 1 bis 3, **dadurch gekennzeichnet, dass** als Aktivator Hexamethylendiisocyanat eingesetzt wird.

5. Verfahren nach einem der Ansprüche 1 bis 4, **dadurch gekennzeichnet, dass** als Katalysator mindestens ein Lactam-Magnesium-Halogenid, Alkali-Alumo-Dilactamat, Alkali- und/oder Erdalkalilactamat eingesetzt wird.

6. Verfahren nach einem der Ansprüche 1 bis 5, **dadurch gekennzeichnet, dass** vor dem Aufschmelzen die Zugabe weiteren Lactams und/oder Katalysators erfolgt.

## Claims

1. Process for the production of cast polyamides via polymerization of lactams in the presence of at least one activator selected from the group comprising 2,4-tolylene diisocyanate (TDI), 2,6-tolylene diisocyanate, a mixture of 2,4-tolylene diisocyanate and 2,6-tolylene diisocyanate, hexamethylene diisocyanate, cyclohexane 1,4-diisocyanate, xylylene diisocyanate, isophorone diisocyanate, 1,5-naphthalene diisocyanate, 4,4'-diphenylmethane diisocyanate, 2,4'-diphenylmethane diisocyanate, 2,2'-diphenylmethane diisocyanate, 4,4'-diphenyldimethylmethane diisocyanate, 1,3-phenylene diisocyanate, 1,4-phenylene diisocyanate, dicyclohexylmethane 4,4'-diisocyanate, dicyclohexylmethane 2,4'-diisocyanate, dicyclohexylmethane 2,2'-diisocyanate, methylcyclohexane diisocyanate, tetramethylxylylene diisocyanate, 2,6-diisopropylphenylene isocyanate, and of at least one catalyst, **characterized in that**
a) at most 5% by weight of the activator is added at temperatures between 70 and 120°C to a lactam melt, and this is homogenized, isolated, optionally dried, packaged and stored, or pastillated on a pastillating belt or flaked on a flaking roll,
b) at most 5% by weight of the catalyst is added at temperatures between 70 and 120°C to a lactam melt, and this is homogenized, and then pastillated on a pastillating belt or flaked on a flaking roll,
the melts from a) and b) are mixed together and then are polymerized in the casting mould at temperatures between 80 and 160°C.

2. Process according to Claim 1, **characterized in that** the temperatures in step a) are 80-100°C and in step b) are 80-100°C.

3. Process for the production of cast polyamides via polymerization according to Claim 1 or 2, **characterized in that** the lactam corresponds to the general formula 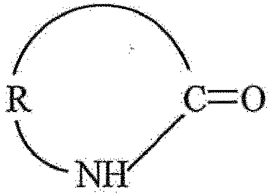 where R is an alkylene group having 3 to 13 carbon atoms.

4. Process according to any of Claims 1 to 3, **characterized in that** the activator used is hexamethylene diisocyanate.

5. Process according to any of Claims 1 to 4, **characterized in that** the catalyst used is at least one lactam magnesium halide, alkali metal aluminodilactamate, alkali metal lactamate and/or alkaline earth metal lactamate.

6. Process according to any of Claims 1 to 5, **characterized in that**, prior to the melting, further lactam and/or catalyst is added.

## Revendications

1. Procédé pour la production de polyamides coulés, par polymérisation de lactames en présence d'au moins un activateur choisi dans le groupe contenant le 2,4-diisocyanate de toluylène (TDI), le 2,6-diisocyanate de toluylène, un mélange de 2,4-diisocyanate de toluylène et 2,6-diisocyanate de toluylène, le diisocyanate d'hexaméthylène, le 1,4-diisocyanate de cyclohexane, le diisocyanate de xylylène, le diisocyanate d'isophorone, le 1,5-diisocyanate de naphthalène, le 4,4'-diisocyanate de diphénylméthane, le 2,4'-diisocyanate de diphénylméthane, le 2,2'-diisocyanate de diphénylméthane, le 4,4'-diisocyanate de diphényl-diméthyl-méthane, le 1,3-diisocyanate de phénylène, le 1,4-diisocyanate de phénylène, le 4,4'-diisocyanate de dicyclohexylméthane, le 2,4'-diisocyanate de dicyclohexylméthane, le 2,2'-diisocyanate de dicyclohexylméthane, le diisocyanate de méthylcyclohexane, le diisocyanate de tétraméthylxylylène, l'isocyanate de 2,6-diisopropyl-phénylène et d'au moins un catalyseur, **caractérisé en ce que**
a) on ajoute l'activateur à raison d'au maximum 5 % en poids à une masse fondue de lactame, à des températures comprises entre 70 et 120 °C, on homogénéise celle-ci, on l'isole, éventuellement on la sèche, façonne et stocke, ou on la réduit en pastilles sur une bande pastilleuse ou la réduit en écailles sur un cylindre écailleur,
b) on ajoute le catalyseur à raison d'au maximum 5 % en poids à une masse fondue de lactame, à des températures comprises entre 70 et 120 °C, on homogénéise celle-ci, puis on la réduit en pastilles sur une bande pastilleuse ou la réduit en écailles sur un cylindre écailleur, on mélange entre elles les masses fondues de a) et b) et ensuite on les soumet à une polymérisation dans le moule de coulée, à des températures comprises entre 80 et 160 °C.

2. Procédé selon la revendication 1, **caractérisé en ce que** les températures sont dans l'étape a) de 80-100 °C et dans l'étape b) de 80-100 °C.

3. Procédé pour la production de polyamides coulés par polymérisation selon la revendication 1 ou 2, **caractérisé en ce que** le lactame correspond à la formule générale (I) 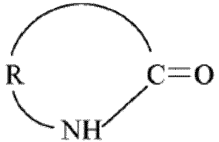 dans laquelle R est un groupe alkylène ayant de 3 à 13 atomes de carbone.

4. Procédé selon l'une quelconque des revendications 1 à 3, **caractérisé en ce qu'**on utilise comme activateur le diisocyanate d'hexaméthylène.

5. Procédé selon l'une quelconque des revendications 1 à 4, **caractérisé en ce qu'**on utilise comme catalyseur au moins un halogénure de lactame-magnésium, aluminodilactamate de métal alcalin, lactamate de métal alcalin et/ou de métal alcalino-terreux.

6. Procédé selon l'une quelconque des revendications 1 à 5, **caractérisé en ce qu'**avant la fusion on effectue l'addition d'un autre lactame et/ou d'un autre catalyseur.
